# FASCICULE DE BREVET EUROPEEN

(11) **EP 2 903 949 B1**
(45) Date de publication et mention de la délivrance du brevet: **30.11.2016**
(21) Numéro de dépôt: 13770945.7
(22) Date de dépôt: 02.10.2013
(51) Int. Cl.: C04B 28/00, C04B 28/02

(54) **PROCÉDÉ DE PRÉPARATION D'UNE COMPOSITION LIANTE INORGANIQUE**
VERFAHREN ZUR HERSTELLUNG EINER ANORGANISCHEN BINDUNGSZUSAMMENSETZUNG
METHOD FOR PREPARING AN INORGANIC BINDING COMPOSITION

(30) Priorité: 02.10.2012 BE 201200657
(43) Date de publication de la demande: 12.08.2015
(73) Titulaire: Geogrind, 7110 Strépy-Bracquegnies (BE)
(72) Inventeur: CINAR, Eric, F-59100 Roubaix (FR); DESCAMPS, Philippe, B-6533 Biercée (BE)
(74) Mandataire: Gevers Patents
(86) Numéro de dépôt international: PCT/EP2013/070532
(87) Numéro de publication internationale: WO 2014/053536

(56) Documents cités:
- WO-A2-2011/135584
- US-A1- 2012 152 153
- YIP ET AL: "Effect of calcium silicate sources on geopolymerisation", CEMENT AND CONCRETE RESEARCH, PERGAMON PRESS, ELMSFORD, NY, US, vol. 38, no. 4, 4 décembre 2007 (2007-12-04), pages 554-564, XP022505279, ISSN: 0008-8846, DOI: 10.1016/J.CEMCONRES.2007.11.001 cité dans la demande
- YIP C K ET AL: "The coexistence of geopolymeric gel and calcium silicate hydrate at the early stage of alkaline activation", CEMENT AND CONCRETE RESEARCH, PERGAMON PRESS, ELMSFORD, NY, US, vol. 35, no. 9, 1 septembre 2005 (2005-09-01), pages 1688-1697, XP027645840, ISSN: 0008-8846 [extrait le 2005-09-01] cité dans la demande

## Description

La présente invention se rapporte à un procédé de préparation d'une composition liante inorganique comprenant une phase géopolymère et une phase hydraulique essentiellement sous forme de silicate de calcium hydraté.

Les phases géopolymères sont obtenues par la mise en contact de matériaux alumino-silicatés avec une solution alcaline à pH élevé (pH>9). Les sources alumino-silicatées pouvant être utilisées pour former les phases géopolymères sont diverses et il peut par exemple s'agir de minéraux naturels tels que l'illite, la stilbite ou encore la kaolinite, de minéraux calcinés comme le métakaolin ou de tout autre matériau de substitution comme des sous-produits calcinés ou des résidus d'exploitations industrielles (cendres volantes, laitiers de hauts fourneaux, ...).

La solution alcaline à pH élevé est une solution de silicates alcalins, composée d'anions silicates et de cations alcalins (Na⁺, K⁺, ...). Cette solution alcaline est communément qualifiée de solution alcaline activante. Il s'agit le plus souvent de solutions de silicate de sodium ou de silicate de potassium.

La mise en contact de tels matériaux alumino-silicatés avec une solution alcaline activante permet donc d'obtenir un polymère inorganique alumino-silicaté essentiellement amorphe via des réactions de polycondensation.

Les géopolymères ou polymères inorganiques, également dénommés polysialates, sont ainsi des polymères de nature minérale qui possèdent une structure tridimensionnelle composée d'un réseau formé de tétraèdres de silicates (SiO₄⁴⁻) et d'aluminates (AlO₄⁵⁻) alternés, liés en leurs sommets par des atomes d'oxygène. Leur formule chimique s'écrit généralement comme suit :

Mₙ[-(SiO₂)_{z}-AlO₂-]ₙ.x H₂O

où M est le métal dont le cation contrebalance la charge négative due à la présence de l'aluminium en position tétraédrique, n est le degré de polycondensation et z, un nombre compris entre 1 et 3.

La formation des géopolymères s'opère en deux étapes principales. Une première étape consiste en la dissolution de SiO₂ et de Al₂O₃ sous l'action d'une solution fortement alcaline activante, ce qui entraîne la formation de monomères. Suit alors une deuxième étape de polycondensation avec libération de molécules d'eau et de polymérisation entre monomères avec une prise et un durcissement du matériau géopolymère en formation au cours du temps.

La formation d'une phase essentiellement géopolymère nécessite donc, hormis de l'eau, principalement deux constituants, à savoir une source d'aluminosilicate fournissant les éléments Si et Al constitutifs du réseau géopolymère et un composé alcalin servant, d'une part, à activer l'aluminosilicate (dissolution de SiO₂ et de Al₂O₃ du réseau géopolymère) et, d'autre part, à établir l'électroneutralité du système géopolymère grâce aux cations alcalins (Na⁺, K⁺, ...) qui contrebalancent l'excès de charges négatives au niveau de l'atome d'aluminium.

Les géopolymères peuvent être valorisés en tant que phases liantes pour un grand nombre d'applications. Ils constituent notamment une alternative aux liants hydrauliques classiques tels que les ciments (OPC) mais également aux résines organiques de type phénolique qui en plus de leur coût élevé posent des problèmes environnementaux. Par exemple, par rapport au ciment Portland dont la prise est assurée par l'hydratation des silicates de calcium (bélite : Ca₂SiO₄, alite : Ca₃SiO₅) avec formation d'un gel composé de chaînes linéaires, les réactions de polycondensation favorisent, au contraire, la formation d'un réseau tridimensionnel. Par conséquent, les réactions de polycondensation confèrent au géopolymère une structure plus compacte que celle des ciments et donc, des propriétés mécaniques au moins équivalentes voire supérieures.

De telles compositions liantes comprenant une phase géopolymère formée au départ de procédés mettant en oeuvre une source d'aluminosilicate et une solution alcaline activante sont par exemple décrites dans les documents EP1144159 et EP0485966. Plus particulièrement, ces deux documents portent sur la formation de matériaux abrasifs comprenant une phase géopolymère dans laquelle sont inclus des grains abrasifs. La phase géopolymère fait donc office d'une composition liante au sein de laquelle sont incorporées des particules abrasives.

Malheureusement, même si de telles compositions liantes présentent certains avantages (faible coût de fabrication, émission faible de CO₂ lors de la fabrication, valorisation de sous-produits de l'industrie, résistance au feu et à la corrosion), certaines caractéristiques liées à leurs propriétés physico-chimiques et mécaniques constituent un obstacle majeur à leur utilisation industrielle à grande échelle, notamment à leur utilisation pour la constitution de matériaux abrasifs. En effet, de telles compositions liantes sont chimiquement et mécaniquement instables, ce qui s'explique par plusieurs paramètres détaillés ci-après.

Un premier paramètre est la faible résistance chimique des phases géopolymères actuelles en milieu aqueux. En effet, les matrices géopolymères actuelles ont tendance à se dissoudre et à se désintégrer en milieu aqueux sous l'effet de la forte basicité générée par les constituants alcalins qui n'ont pas réagi lors de la réaction de géopolymérisation, c'est-à-dire lors de la réaction de polycondensation libérant des molécules d'eau. En d'autres termes, les phases géopolymères sont attaquées par les ions alcalins en solution aqueuse, ce qui favorise leur dissolution.

Un second paramètre est lié à la génération de molécules d'eau lors de la réaction de polycondensation. Il en résulte une présence de molécules d'eau dans le réseau tétraédrique des phases géopolymères, qui induisent des contraintes susceptibles d'engendrer la formation de fissures, cet effet étant exacerbé si le matériau est par exemple soumis à des cycles de chauffe-refroidissement. De ce fait, la résistance mécanique de la composition liante est ainsi affaiblie car les fissures font office de défauts critiques et donc d'amorces à la fracture dans ce matériau à caractère fragile.

Un troisième paramètre est la faible ténacité qui caractérise la résistance à la propagation de fissures d'un matériau. Cette faible ténacité implique une faible tolérance aux défauts inhérents aux matériaux géopolymères, de sorte qu'un défaut même de taille limitée dans la structure du géopolymère peut conduire à sa fracture.

Un quatrième paramètre est le phénomène de propagation sous critique de fissure étant dû à l'attaque des ions alcalins (Na⁺, K⁺) en front des fissures préexistantes dans la phase géopolymère. Ce phénomène contribue également à un affaiblissement du matériau et peut de nouveau conduire à la fracture par un phénomène de fatigue mécanique.

Un cinquième paramètre est la structure même des phases géopolymères qui, à l'instar de celle des verres, est essentiellement amorphe. En effet, une telle structure présente une dureté assez faible susceptible de conduire à un phénomène d'usure rapide et important incompatible avec les applications industrielles.

Afin de faire face à ces inconvénients, l'état de la technique propose des solutions alternatives et notamment des procédés de préparation de compositions liantes inorganiques comprenant une phase géopolymère (formée au départ d'une source d'aluminosilicate et d'une solution alcaline activante) et une phase hydraulique essentiellement sous forme de silicate de calcium hydraté. Par exemple, les documents US2012/0152153, WO2011/135584 et les articles scientifiques de Yip et al. (Effect of calcium silicate sources on geopolymerisation. Cement and concrete research, Pergamon Press, Elmsford, NY, US, vol. 38, no. 4, 2007 / The coexistence of geopolymeric gel and calcium silicate hydrate at the early stage of alkaline activation. Cement and concrete research, Pergamon Press, Elmsford, NY, US, vol. 35, no. 1, 2005) proposent des procédés pour obtenir des compositions liantes inorganiques telles que décrites ci-dessus. Ces procédés reposent plus particulièrement sur une amenée et sur un mélange simultanés de tous les composants (solution alcaline activante + source d'aluminosilicate + source d'aluminosilicate riche en calcium réactif). Cependant, malheureusement, les compositions liantes inorganiques obtenues selon ces procédés connus de l'état de la technique ne permettent pas d'obtenir des propriétés physico-chimiques et mécaniques satisfaisantes des produits formés, malgré l'emploi d'agents structurants (charges minérales).

La présente invention a pour but de pallier les inconvénients de l'état de la technique en procurant un procédé de préparation d'une composition liante inorganique comprenant une phase géopolymère et une phase hydraulique essentiellement sous forme de silicate de calcium hydraté dont les propriétés physico-chimiques et mécaniques sont améliorées notamment en termes de stabilité chimique et de résistance aux contraintes mécaniques.

Pour résoudre ce problème, il est prévu suivant l'invention un procédé tel qu'indiqué au début caractérisé en ce qu'il comprend les étapes séquentielles suivantes :
a) une formation d'un milieu réactionnel au départ d'une solution aqueuse de silicate de métal alcalin activante additionnée d'au moins un hydroxyde de métal alcalin pour atteindre un pH élevé de l'ordre de 13-14,
b) un ajout, à la température ambiante, d'une source d'aluminosilicate dans ledit milieu réactionnel pour former un mélange,
c) une homogénéisation dudit mélange pendant quelques minutes jusqu'à l'obtention d'une phase géopolymère,
d) un ajout, à ladite phase géopolymère, d'au moins une source d'aluminosilicate riche en calcium réactif pour former une phase hydraulique essentiellement sous forme de silicate de calcium hydraté et obtenir une composition liante inorganique hybride sous forme d'une pâte.

Eventuellement, ladite étape d'homogénéisation dudit mélange pendant quelques minutes jusqu'à l'obtention d'une phase géopolymère est suivie par une étape de mise au repos durant laquelle continue à se former ladite phase géopolymère.

Par les termes « phase hydraulique essentiellement sous forme de silicate de calcium hydraté », on entend, au sens de la présente invention, une phase cristalline ou semi-cristalline formée au départ d'au moins une source d'aluminosilicate riche en calcium réactif, par exemple au départ de laitier de hauts fourneau, qui par hydratation conduit à un effet d'induration.

Par les termes « source d'aluminosilicate riche en calcium réactif », on entend, au sens de la présente invention, une source d'aluminosilicate de calcium permettant de remobiliser le calcium en milieu alcalin.

Dans le cadre du procédé de la présente invention, il a été montré que l'ajout d'une phase hydraulique essentiellement sous forme de silicate de calcium hydraté (C-S-H) et formée au départ d'au moins une source d'aluminosilicate riche en calcium réactif permet à la fois de consommer les molécules d'eau libérées lors de la réaction de polycondensation et de piéger les ions alcalins. Ces propriétés de ladite phase essentiellement sous forme de silicate de calcium hydraté permettent d'améliorer le manque de stabilité des phases géopolymères tant d'un point de vue physico-chimique que mécanique. L'ajout d'une source d'aluminosilicate riche en calcium (tel qu'un laitier de haut fourneau), de manière à former en quantité relativement importante une phase hydraulique de type C-S-H en plus de la phase géopolymère, permet d'obtenir un matériau composite hybride (géopolymère / phase hydraulique de type C-S-H) plus stable chimiquement et mécaniquement. En effet, le piégeage et la consommation des molécules d'eau excédentaires libérées lors de la réaction de polycondensation minimise fortement la formation de fissures lors de cycles humidification-séchage, les molécules d'eau n'étant plus présentes, ou du moins en quantité moindre, au sein du réseau tétraédrique. Ce piégeage des molécules d'eau est obtenu via une hydratation de la phase hydraulique essentiellement sous forme de C-S-H. Par ailleurs, le piégeage des ions alcalins permet quant à lui de minimiser les attaques des phases géopolymères par les ions alcalins en phase aqueuse, ce qui permet par conséquent de limiter fortement la génération de fissures dans la composition liante qui présente ainsi une résistance mécanique accrue. Ce piégeage des ions alcalins, effectué soit par leur fixation au niveau des sites du réseau cristallin des phases minéralogiques formées, soit par formation d'oxydes ou d'hydroxydes insolubles, permet également de limiter le phénomène de propagation sous critique de fissures. Ainsi, suite à l'ajout de ladite phase hydraulique essentiellement sous forme de silicate de calcium hydraté, une composition liante chimiquement et mécaniquement stable est obtenue.

Il a également été montré que des ions Ca⁺⁺ de la phase hydraulique essentiellement sous forme de silicate de calcium hydraté (C-S-H) n'attaquent pas la phase géopolymère car ces ions ne peuvent pas se retrouver dans le géopolymère pour cause d'encombrement stérique.

Des telles compositions liantes inorganiques peuvent être qualifiées de produits hybrides comprenant d'une part une phase géopolymère et d'autre part une phase hydraulique essentiellement sous forme de silicate de calcium hydraté (C-S-H), laquelle permet d'assurer la stabilité chimique de la phase géopolymère et permet d'améliorer sa ténacité et sa dureté (propriétés mécaniques).

Dans le cadre de la présente invention, de façon surprenante et inattendue, il a été montré que ce séquençage spécifique des étapes du procédé de préparation d'une composition liante inorganique est essentiel puisqu'il en détermine les propriétés physico-chimiques et mécaniques. Un tel séquençage permet en effet d'obtenir une composition liante inorganique présentant à la fois une résistance mécanique et une stabilité chimique accrues en comparaison avec un procédé selon lequel tous les constituants sont ajoutés simultanément.

Plus particulièrement, il a été mis en évidence, dans le cadre de la présente invention, qu'une activation des sources d'aluminosilicate par ajout d'une solution activante (par exemple du verre souluble ou waterglass) préalablement préparée selon l'étape a) du procédé suivant l'invention permet d'initier des réactions de polycondensation conduisant à la formation de la phase géopolymère.

En outre, il a été déterminé qu'un ajout subséquent d'au moins une source d'aluminosilicate riche en calcium réactif selon l'étape d) du procédé suivant l'invention permet, après dissolution du calcium présent, de former une phase hydraulique essentiellement sous forme de silicate de calcium hydraté (C-S-H) en complément de la phase géopolymère qui continue à se former. Selon l'invention, cette phase hydraulique essentiellement sous forme de silicate de calcium hydraté (C-S-H) se formant en deuxième lieu permet de combler les pores et les « vides » présents au sein de la phase géopolymère, ce qui conduit à la formation d'un matériau plus dense présentant une meilleure résistance mécanique.

Il a également été relevé, dans le cadre de la présente invention, qu'une mise en oeuvre en mélangeant tous les composés en une seule fois, c'est-à-dire sans respecter le séquençage suivant l'invention, aboutit à une activation simultanée mais moins rapide des sources d'aluminosilicates permettant de former la phase géopolymère et de la source d'aluminosilicate riche en calcium réactif servant à la formation de la phase hydraulique essentiellement sous forme de silicate de calcium hydraté (C-S-H). Cette activation moins rapide est due à l'effet de masse (même quantité de milieu réactionnel ou solution activante pour une quantité plus importante de composés solides apportés en une seule fois), ce qui conduit à la formation simultanée des phases géopolymère et C-S-H qui sont donc en compétition. Il en résulte un degré d'avancement plus faible des réactions de polycondensation conduisant à la formation du géopolymère et donc un degré de réticulation plus faible avec pour conséquence une résistance mécanique plus faible (essentiellement observée durant les premiers jours de maturation).

Par ailleurs, il a été observé que le temps de prise du matériau hybride géopolymère/phase hydraulique de type C-S-H est plus long dans le cas d'une mise en oeuvre sans séquençage, ce qui est lié à une activation plus lente telle que mentionnée ci-dessus.

Dans le cadre de la présente invention, la phase de type C-S-H ne constitue pas simplement un sous-produit minoritaire (<10% en poids par rapport au point total de la composition liante) de la réaction de géopolymérisation, c'est-à-dire de la réaction de polycondensation libérant des molécules d'eau, mais sa formation est favorisée et recherchée par ajout d'au moins une source d'aluminosilicate riche en calcium réactif après l'obtention de la phase géopolymère.

De préférence, ledit au moins un hydroxyde de métal alcalin utilisé pour atteindre un pH élevé de l'ordre de 13-14 pour former ledit milieu réactionnel est du NaOH ou du KOH.

Avantageusement, selon le procédé de la présente invention, ledit milieu réactionnel est formé par une mise en solution de 5 à 10% en poids, de préférence de 5 à 7% en poids, dudit hydroxyde de métal alcalin par rapport au poids total de ladite composition et de 5 à 40% en poids, de préférence de 10 à 30% en poids, de ladite solution aqueuse de silicate de métal alcalin activante par rapport au poids total de ladite composition.

De préférence, selon le procédé de la présente invention, ladite solution aqueuse de silicate de métal alcalin activante est choisie dans le groupe constitué d'une solution de silicate de sodium, d'une solution de silicate de potassium et de leurs mélanges.

Avantageusement, selon le procédé de la présente invention, ladite source d'aluminosilicate est ajoutée dans ledit milieu réactionnel à hauteur de 5 à 25% en poids par rapport au poids total de ladite composition, de préférence à hauteur de 10 à 20% en poids par rapport au poids total de ladite composition.

De préférence, selon le procédé de la présente invention, ladite phase géopolymère est formée au départ d'au moins un polymère de nature minérale qui possède une structure tridimensionnelle composée d'un réseau formé de tétraèdres de silicates (SiO₄⁴⁻) et d'aluminates (AlO₄⁵⁻) alternés, liés en leurs sommets par des atomes d'oxygène.

De préférence, selon le procédé de la présente invention, ladite source d'aluminosilicate est choisie dans le groupe constitué de l'illite, de la stilbite, de la kaolinite, du métakaolin, de cendres volantes et de leurs mélanges.

De préférence, selon le procédé de la présente invention, ladite au moins une source d'aluminosilicate riche en calcium réactif est ajoutée à ladite phase géopolymère à hauteur de 10 à 40% en poids par rapport au poids total de ladite composition, de préférence à hauteur de 15 à 30% en poids par rapport au poids total de ladite composition.

De préférence, selon le procédé de la présente invention, ladite source d'aluminosilicate riche en calcium réactif est choisie dans le groupe constitué des laitiers de hauts fourneaux, de matières inorganiques naturelles ou synthétiques, de la wollastonite, de l'augite, des ciments et de leurs mélanges.

Avantageusement, selon le procédé de la présente invention de l'hydroxyde d'aluminium (qui peut être un déchet ou un sous-produit industriel) peut être ajouté, comme source alternative d'Al, à hauteur de 0,1 à 5% en poids par rapport au poids total de ladite composition, de préférence à hauteur de 1 à 3% en poids par rapport au poids total de ladite composition.

Avantageusement, selon le procédé de la présente la présente invention, des agents superplastifiants, des agents retardateurs de prise et des agents structurants peuvent être ajoutés à la dite composition.

Avantageusement, suivant le procédé selon l'invention, les différents composés sont ajoutés pour obtenir une composition liante inorganique présentant un rapport massique liquide/solide compris entre 0,25 et 0,6 afin de présenter une fluidité suffisante permettant son coulage, tout en évitant des phénomènes de démixtion et en limitant la fissuration lors du séchage.

De préférence, suivant le procédé selon l'invention, les différents composés sont ajoutés pour obtenir une composition liante inorganique présentant un rapport Na/Al compris entre 0,8 et 1,4 pour qu'un séchage optimal de ladite composition liante inorganique puisse avoir lieu, ce qui est notamment lié au caractère hygroscopique du sodium en excès.

Avantageusement, suivant le procédé selon l'invention, les différents composés sont ajoutés pour obtenir une composition liante inorganique présentant un rapport Si/Al compris entre 1 et 3. Des rapports élevés et supérieures à 3 conduisent à des matériaux faiblement indurés dont la composition s'écarte de celle des géopolymères et se rapproche de celle d'un gel de silice. Par contre, des rapports inférieurs ou égaux à 3 mais supérieurs ou égaux à 1 donnent lieu à des produits qui présentent une induration importante et des propriétés mécaniques élevées.

De préférence, suivant le procédé selon l'invention, les différents composés sont ajoutés pour obtenir une composition liante inorganique comprenant ladite phase hydraulique essentiellement sous forme de silicate de calcium hydraté en une quantité égale ou inférieure aux teneurs des constituants la composant.

D'autres formes de réalisation du procédé de fabrication d'une composition liante inorganique suivant l'invention sont indiquées dans les revendications annexées.

D'autres détails et particularités de l'invention ressortiront des exemples de réalisation non limitatifs donnés ci-après.

### Exemple comparatif 1 - matériaux essentiellement géopolymériques et matériaux composites hybrides géopolymère/phase hydraulique de type C-S-H selon l'invention

Le tableau 1 reprend des compositions optimisées de quelques matériaux essentiellement géopolymériques (1 à 3) et de quelques matériaux composites hybrides géopolymère/phase hydraulique de type C-S-H selon l'invention (4 à 7).

**Tableau 1**

| | Argile | Silicate de Na | NaOH | Al(OH)₃ | CV *a* | Calcin | LHF *b* | HCMg *c* | H₂O | L/S | Na/ Al | Si/ Al |
|---|---|---|---|---|---|---|---|---|---|---|---|---|
| | % massique | | | | | | | | | | | |
| 1 | 41,3 | 28,2 | 11,6 | 0 | 0 | 0 | 0 | 0 | 19 | 0,6 | 1,1 | 1,1 |
| 2 | 23 | 32 | 8 | 3,5 | 22 | 1,5 | 0 | 0 | 10 | 0,5 | 0,9 | 1,7 |
| 3 | 22,2 | 30,9 | 7,3 | 3,4 | 21 | 1,4 | 0 | 2,9 | 11 | 0,5 | 0,9 | 1,7 |
| 4 | 18,7 | 26 | 6,5 | 2,9 | 0 | 0 | 27 | 0 | 19 | 0,6 | 1 | 1,9 |
| 5 | 18,7 | 26 | 6,5 | 0 | 0 | 0 | 30 | 0 | 19 | 0,6 | 1 | 1,9 |
| 6 | 4,2 | 25 | 5 | 3,3 | 4,2 | 0 | 42 | 0 | 17 | 0,5 | 1,1 | 2,4 |
| 7 | 8 | 24 | 5,2 | 2,8 | 4 | 0 | 36 | 0 | 20 | 0,5 | 1,1 | 2,2 |

| | | | | | | | | | | | | |
|---|---|---|---|---|---|---|---|---|---|---|---|---|
| *^{a}* Cendres volantes *^{b}* Laitier granulé de Haut Fourneau *^{c}* Hydrogénocarbonate de magnésium | | | | | | | | | | | | |

Certaines des propriétés (mécanique et physico-chimique) de ces deux types de matériaux sont données au tableau 2.

**Tableau 2**

| | Résistance à l'écrasement | Densité géométrique | Densité réelle | Tenue à l'eau ** (stabilité chimique) | Fissurations (microstructure) |
|---|---|---|---|---|---|
| | (MPa) | | | | |
| 1 | 30-40* | 1,3 | / | + | fortement présentes |
| 2 | 20-30* | 1,6 | 2,2 | ++ | fortement présentes |
| 3 | 20-25* | 1,6 | 1,8 | +++ | fortement présentes |
| 4 | 30-35* | 1,8 | 2,2 | +++ | peu présentes |
| 5 | 30-40* | 1,8 | 2,2 | +++ | peu présentes |
| 6 | 40-45* | 1,8 | 1,9 | +++ | peu présentes |
| 7 | 45-50* | 1,8 | 1,8 | +++ | peu présentes |

| | | | | | |
|---|---|---|---|---|---|
| * valeur maximale obtenue ** estimation sur base du taux de dissolution de la matrice géopolymère immergée dans l'eau | | | | | |

Comme le montre le tableau 2, à l'instar de l'ajout d'hydrogénocarbonate de magnésium (référence 3), l'ajout de laitier de haut fourneau (références 4 à 7) comme source de calcium permet d'améliorer de manière significative la stabilité chimique des matériaux. Cependant, la présence d'hydrogénocarbonate conduit à une baisse des propriétés mécaniques alors que la présence de laitier permet de maintenir voire d'améliorer la résistance mécanique des matériaux obtenus. Ceci s'explique comme indiqué précédemment par la formation après la phase géopolymère d'une phase majoritairement de type C-S-H naturellement plus stable en milieu aqueux.

### Exemple comparatif 2 - mélange des composants en une seule étape ou mélange des composants selon le séquençage des étapes suivant l'invention

Des essais ont été menés afin de comparer (en termes de propriétés mécaniques et physico-chimiques) des matériaux composites hybrides géopolymères/phase hydraulique de type C-S-H selon l'invention. Ces matériaux ont été formés au départ de mêmes composants présents selon un même pourcentage massique dans la composition (voir tableau 3 ci-dessous) mais en mettant en oeuvre un procédé respectant le séquençage selon l'invention ou un procédé mélangeant tous les composants en une seule fois selon l'état de la technique.

**Tableau 3**

| | Argile | Silicate de Na | NaOH | Al(OH)₃ | CV *a* | Calcin | LHF *b* | HCMg *c* | H₂O | L/S | Na/ Al | Si/ Al |
|---|---|---|---|---|---|---|---|---|---|---|---|---|
| | % massique | | | | | | | | | | | |
| 8 | 20 | 40 | 5 | 3 | 12 | 0 | 20 | 0 | 0 | 0,4 | 0,8 | 2,0 |

| | | | | | | | | | | | | |
|---|---|---|---|---|---|---|---|---|---|---|---|---|
| ^{a} Cendres volantes ^{b} Laitier granulé de Haut Fourneau ^{c} Hydrogénocarbonate de magnésium. | | | | | | | | | | | | |

Lorsque les matériaux composites hybrides géopolymères/phase hydraulique de type C-S-H ont été obtenus selon le procédé suivant l'invention, les étapes séquentielles suivantes ont été réalisées :
1) préparation d'un milieu réactionnel par dissolution de 5 g d'hydroxyde de sodium en cristaux de qualité analytique dans 40 g de solution aqueuse de silicate de sodium (de telle sorte que les rapports molaires SiO₂/Na₂O et H₂O/Na₂O valent 3,3 et 30 respectivement),
2) ajout, au milieu réactionnel obtenu lors de l'étape 1) et à une température de 20±2°C, d'un mélange homogène comprenant 20 g de métakaolin sous forme d'une fine poudre comme source d'aluminosilicate, 12 g de cendres volantes de type F (faible teneur en CaO) et 3 g d'hydroxyde d'aluminium,
3) homogénéisation du mélange obtenu lors de l'étape 2) à l'aide du mélangeur automatique pendant 3-5 minutes à une vitesse de mélange de 500 tours/minute, pour obtenir une phase géopolymère,
4) ajout à la phase géopolymère obtenue lors de l'étape 3), par mélange à une vitesse de 500 tours/minute durant 2 minutes, de 20 g de laitier de haut fourneau comme source d'aluminosilicate riche en calcium réactif afin de former une phase hydraulique essentiellement sous forme de silicate de calcium hydraté et d'obtenir une composition liante inorganique hybride sous forme d'une pâte,
5) coulage de la pâte obtenue selon l'étape 4) dans des moules sur support vibrant puis mise en chambre à une humidité relative supérieure à 95% pour maturation durant au moins 3 jours.

Lorsque les matériaux composites hybrides géopolymères/phase hydraulique de type C-S-H ont été obtenus selon le procédé connu de l'état de la technique, tous les composants mentionnés plus haut ont été mis en oeuvre simultanément sous les mêmes conditions de température et selon une même vitesse de mélange.

Le tableau 4 présente les résultats obtenus en termes de propriétés mécaniques et physico-chimiques des matériaux composites hybrides géopolymères/phase hydraulique de type C-S-H obtenus selon le procédé séquentiel suivant l'invention (A) ou selon le procédé non séquentiel (mélange en une fois) suivant l'état de la technique (B). ces mesures ont été effectuées après 3 jours de maturation.

**Tableau 4**

| | Résistance à l'écrasement | Densité géométrique | Densité réelle | Tenue à l'eau ** (stabilité chimique) | Fissurations (microstructure) | Temps de prise |
|---|---|---|---|---|---|---|
| | (MPa) | | | | | (min) |
| A | 40* | 1,8 | 1,9 | +++ | peu présentes | 75 |
| B | 28* | 1,8 | 1,9 | ++ | fortement présentes | 105 |

| | | | | | | |
|---|---|---|---|---|---|---|
| * valeur maximale obtenue ** estimation sur base du taux de dissolution de la matrice géopolymère immergée dans l'eau | | | | | | |

Comme on peut le constater, le séquençage (A) des étapes du procédé suivant l'invention permet de favoriser la rapidité de formation de la phase géopolymère (75 minutes) qui présente par conséquent une induration plus rapide justifiée par une diminution du temps de prise. Il en résulte une augmentation et une amélioration des performances mécaniques (résistance à l'écrasement et présence négligeable de fissurations) permettant par ailleurs de réaliser un démoulage plus rapide des pièces obtenues au départ des matériaux composites hybrides géopolymères/phase hydraulique de type C-S-H. En outre, le séquençage suivant l'invention permet également d'obtenir un produit présentant une tenue à l'eau améliorée.

Par contre, lors d'un ajout de tous les constituants (composants) solides en même temps (B), c'est-à-dire lors d'une mise en oeuvre des composants sans respecter le séquençage suivant l'invention, une résistance à l'écrasement et une tenue à l'eau moindres sont relevées. Par ailleurs, des fissurations sont fortement présentes au sein de la microstructure des matériaux composites hybrides géopolymères/phase hydraulique de type C-S-H obtenus.

De ces résultats, il ressort donc clairement que le séquençage des étapes du procédé suivant l'invention permet d'obtenir de manière inattendue des propriétés mécaniques et physico-chimiques améliorées et optimisées des matériaux composites hybrides géopolymères/phase hydraulique de type C-S-H obtenus.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé de préparation d'une composition liante inorganique comprenant une phase géopolymère et une phase hydraulique essentiellement sous forme de silicate de calcium hydraté, **caractérisé en ce qu'**il comprend les étapes séquentielles suivantes :
a) une formation d'un milieu réactionnel au départ d'une solution aqueuse de silicate de métal alcalin activante additionnée d'au moins un hydroxyde de métal alcalin pour atteindre un pH élevé de l'ordre de 13-14,
b) un ajout, à la température ambiante, d'une source d'aluminosilicate dans ledit milieu réactionnel pour former un mélange,
c) une homogénéisation dudit mélange pendant quelques minutes, jusqu'à l'obtention d'une phase géopolymère,
d) un ajout, à ladite phase géopolymère, d'au moins une source d'aluminosilicate riche en calcium réactif pour former une phase hydraulique essentiellement sous forme de silicate de calcium hydraté et obtenir une composition liante inorganique hybride sous forme d'une pâte.

2. Procédé de préparation d'une composition liante inorganique selon la revendication 1, **caractérisé en ce que** ledit milieu réactionnel est formé par une mise en solution de 5 à 10% en poids, de préférence de 5 à 7% en poids, dudit hydroxyde de métal alcalin par rapport au poids total de ladite composition et de 5 à 40% en poids, de préférence de 10 à 30% en poids, de ladite solution aqueuse de silicate de métal alcalin activante par rapport au poids total de ladite composition.

3. Procédé de préparation d'une composition liante inorganique selon les revendications 1 ou 2, **caractérisé en ce que** ladite solution aqueuse de silicate de métal alcalin activante est choisie dans le groupe constitué d'une solution de silicate de sodium, d'une solution de silicate de potassium et de leurs mélanges.

4. Procédé de préparation d'une composition liante inorganique selon l'une quelconque des revendications 1 à 3, **caractérisé en ce que** ladite source d'aluminosilicate est ajoutée dans ledit milieu réactionnel à hauteur de 5 à 25% en poids par rapport au poids total de ladite composition, de préférence à hauteur de 10 à 20% en poids par rapport au poids total de ladite composition.

5. Procédé de préparation d'une composition liante inorganique selon l'une quelconque des revendications 1 à 4, **caractérisé en ce que** ladite phase géopolymère est formée au départ d'au moins un polymère de nature minérale qui possède une structure tridimensionnelle composée d'un réseau formé de tétraèdres de silicates (SiO₄⁴⁻) et d'aluminates (AlO₄⁵⁻) alternés, liés en leurs sommets par des atomes d'oxygène.

6. Procédé de préparation d'une composition liante inorganique selon l'une quelconque des revendications 1 à 5, **caractérisé en ce que** ladite source d'aluminosilicate est choisie dans le groupe constitué de l'illite, de la stilbite, de la kaolinite, du métakaolin, de cendres volantes et de leurs mélanges.

7. Procédé de préparation d'une composition liante inorganique selon l'une quelconque des revendications 1 à 6, **caractérisé en ce que** ladite au moins une source d'aluminosilicate riche en calcium réactif est ajoutée à ladite phase géopolymère à hauteur de 10 à 40% en poids par rapport au poids total de ladite composition, de préférence à hauteur de 15 à 30% en poids par rapport au poids total de ladite composition.

8. Procédé de préparation d'une composition liante inorganique selon l'une quelconque des revendications 1 à 7, **caractérisé en ce que** ladite source d'aluminosilicate riche en calcium réactif est choisie dans le groupe constitué des laitiers de hauts fourneaux et de matières inorganiques naturelles ou synthétiques, de la wollastonite, de l'augite, des ciments et de leurs mélanges.

9. Procédé de préparation d'une composition liante inorganique selon l'une quelconque des revendications 1 à 8, **caractérisé en ce que** les différents composés sont ajoutés pour obtenir une composition liante inorganique présentant un rapport massique liquide/solide compris entre 0,25 et 0,6.

10. Procédé de préparation d'une composition liante inorganique selon l'une quelconque des revendications 1 à 9, **caractérisé en ce que** les différents composés sont ajoutés pour obtenir une composition liante inorganique présentant un rapport Na/Al compris entre 0,8 et 1,4.

11. Procédé de préparation d'une composition liante inorganique selon l'une quelconque des revendications 1 à 10, **caractérisé en ce que** les différents composés sont ajoutés pour obtenir une composition liante inorganique présentant un rapport Si/Al compris entre 1 et 3.

12. Procédé de préparation d'une composition liante inorganique selon l'une quelconque des revendications 1 à 11, **caractérisé en ce que** les différents composés sont ajoutés pour obtenir une composition liante inorganique comprenant ladite phase hydraulique essentiellement sous forme de silicate de calcium hydraté en une quantité égale ou inférieure aux teneurs des constituants la composant.

## Patentansprüche

1. Verfahren zur Herstellung einer anorganischen Bindezusammensetzung, welches eine geopolymere Phase und eine wässrige Phase, im Wesentlichen in Form von hydriertem Calciumsilikat, umfasst, **dadurch gekennzeichnet, dass** es die folgenden sequenziellen Schritte umfasst:
a) Bildung eines Reaktionsmilieus ausgehend von einer aktivierenden wässrigen Lösung von Alkalimetallsilikat, der zumindest ein Alkalimetallhydroxid beigemengt wurde, um einen erhöhten pH-Wert von 13-14 zu erreichen,
b) Hinzufügung, bei Raumtemperatur, einer Quelle von Aluminosilikat zum erwähnten Reaktionsmilieu, um eine Mischung herzustellen,
c) Homogenisierung der erwähnten Mischung während einiger Minuten, bis eine geopolymere Phase erhalten wird,
d) Hinzufügung, zur erwähnten geopolymeren Phase, von zumindest einer Quelle von Aluminosilikat, die reich an reaktivem Calcium ist, um eine wässrige Phase im Wesentlichen in Form von hydriertem Calciumsilikat zu bilden und eine hybride anorganische Bindezusammensetzung in Form einer Paste zu erhalten.

2. Verfahren zur Herstellung einer anorganischen Bindezusammensetzung nach Anspruch 1, **dadurch gekennzeichnet, dass** das erwähnte Reaktionsmilieu durch eine Auflösung von 5 bis 10 Gew.-%, bevorzugt 5 bis 7 Gew.-%, des erwähnten Alkalimetallhydroxids im Verhältnis zum Gesamtgewicht der erwähnten Zusammensetzung und von 5 bis 40 Gew.-%, bevorzugt 10 bis 30 Gew.-%, der erwähnten aktivierenden wässrigen Lösung von Alkalimetallsilikat im Verhältnis zum Gesamtgewicht der erwähnten Zusammensetzung gebildet wird.

3. Verfahren zur Herstellung einer anorganischen Bindezusammensetzung nach den Ansprüchen 1 oder 2, **dadurch gekennzeichnet, dass** die erwähnte aktivierende wässrige Lösung von Alkalimetallsilikat aus der Gruppe bestehend aus einer Lösung von Natriumsilikat, einer Lösung von Kaliumsilikat und deren Mischungen ausgewählt wird.

4. Verfahren zur Herstellung einer anorganischen Bindezusammensetzung nach irgendeinem der Ansprüche 1 bis 3, **dadurch gekennzeichnet, dass** die erwähnte Quelle von Aluminosilikat dem erwähnten Reaktionsmilieu im Umfang von 5 bis 25 Gew.-% im Verhältnis zum Gesamtgewicht der erwähnten Zusammensetzung zugesetzt wird, bevorzugt im Umfang von 10 bis 20 Gew.-% im Verhältnis zum Gesamtgewicht der erwähnten Zusammensetzung.

5. Verfahren zur Herstellung einer anorganischen Bindezusammensetzung nach irgendeinem der Ansprüche 1 bis 4, **dadurch gekennzeichnet, dass** die erwähnte geopolymere Phase ausgehend von zumindest einem mineralischen Polymer gebildet wird, das eine dreidimensionale Struktur hat, bestehend aus einem Netz geformt aus Tetraedern von alternierenden Silikaten (SiO₄⁴⁻) und Aluminaten (AlO₄⁵⁻), an ihren Spitzen verbunden durch Sauerstoffatome.

6. Verfahren zur Herstellung einer anorganischen Bindezusammensetzung nach irgendeinem der Ansprüche 1 bis 5, **dadurch gekennzeichnet, dass** die erwähnte Quelle von Aluminosilikat aus der Gruppe bestehend aus Illit, Stilbit, Kaolinit, Metakaolin, Flugasche und deren Mischungen ausgewählt wird.

7. Verfahren zur Herstellung einer anorganischen Bindezusammensetzung nach irgendeinem der Ansprüche 1 bis 6, **dadurch gekennzeichnet, dass** die erwähnte zumindest eine Quelle von Aluminosilikat, welche reich an reaktivem Calcium ist, der erwähnten geopolymeren Phase im Umfang von 10 bis 40 Gew.-% im Verhältnis zum Gesamtgewicht der erwähnten Zusammensetzung zugesetzt wird, bevorzugt im Umfang von 15 bis 30 Gew.-% im Verhältnis zum Gesamtgewicht der erwähnten Zusammensetzung.

8. Verfahren zur Herstellung einer anorganischen Bindezusammensetzung nach irgendeinem der Ansprüche 1 bis 7, **dadurch gekennzeichnet, dass** die erwähnte Quelle von Aluminosilikat, welche reich an reaktivem Calcium ist, aus der Gruppe bestehend aus Hochofenschlacke und natürlichen oder synthetischen anorganischen Materialien, Wollastonit, Augit, Zement und deren Mischungen ausgewählt wird.

9. Verfahren zur Herstellung einer anorganischen Bindezusammensetzung nach irgendeinem der Ansprüche 1 bis 8, **dadurch gekennzeichnet, dass** die verschiedenen Verbindungen hinzugefügt werden, um eine anorganische Bindezusammensetzung zu erhalten, welche ein Massenverhältnis flüssig/fest zwischen 0,25 und 0,6 aufweist.

10. Verfahren zur Herstellung einer anorganischen Bindezusammensetzung nach irgendeinem der Ansprüche 1 bis 9, **dadurch gekennzeichnet, dass** die verschiedenen Verbindungen hinzugefügt werden, um eine anorganische Bindezusammensetzung zu erhalten, welche ein Verhältnis Na/AI zwischen 0,8 und 1,4 aufweist.

11. Verfahren zur Herstellung einer anorganischen Bindezusammensetzung nach irgendeinem der Ansprüche 1 bis 10, **dadurch gekennzeichnet, dass** die verschiedenen Verbindungen hinzugefügt werden, um eine anorganische Bindezusammensetzung zu erhalten, welche ein Verhältnis Si/Al zwischen 1 und 3 aufweist.

12. Verfahren zur Herstellung einer anorganischen Bindezusammensetzung nach irgendeinem der Ansprüche 1 bis 11, **dadurch gekennzeichnet, dass** die verschiedenen Verbindungen hinzugefügt werden, um eine anorganische Bindezusammensetzung zu erhalten, welche die erwähnte wässrige Phase im Wesentlichen in Form von hydriertem Calciumsilikat in einer Menge enthält, die gleich oder kleiner als die Gehalte der Bestandteile ist, aus denen sie besteht.

## Claims

1. A method to prepare an inorganic binder composition comprising a geopolymeric phase and a hydraulic phase essentially in the form of calcium silicate hydrate, **characterized in that** it comprises the following steps in sequence:
a) forming a reaction medium starting from an activating aqueous solution of alkaline metal silicate, at least one alkaline metal hydroxide being added thereto to reach a high pH in the order of 13-14,
b) adding, at ambient temperature, an aluminosilicate source to said reaction mixture to form a mixture,
c) homogenising said mixture for a few minutes until a geopolymeric phase is obtained,
d) adding to said geopolymeric phase at least one aluminosilicate source rich in reactive calcium to form a hydraulic phase essentially in the form of calcium silicate hydrate and to obtain a hybrid inorganic binder composition in the form of a paste.

2. The method to prepare an inorganic binder composition according to claim 1, **characterized in that** said reaction medium is formed by placing in solution 5 to 10 weight %, preferably 5 to 7 weight % of said alkaline metal hydroxide relative to the total weight of said composition, and 5 to 40 weight %, preferably 10 to 30 weight % of said activating aqueous solution of alkaline metal silicate relative to the total weight of said composition.

3. The method to prepare an inorganic binder composition according to claims 1 or 2, **characterized in that** said activating aqueous solution of alkaline metal silicate is selected from the group formed by a sodium silicate solution, potassium silicate solution and mixtures thereof.

4. The method to prepare an inorganic binder composition according to any of claims 1 to 3, **characterized in that** said aluminosilicate source is added to said reaction mixture in the proportion of 5 to 25 weight % relative to the total weight of said composition, preferably in the proportion of 10 to 20 weight % relative to the total weight of said composition.

5. The method to prepare an inorganic binder composition according to any of claims 1 to 4, **characterized in that** said geopolymeric phase is formed starting from at least one polymer of mineral type having a three-dimensional structure composed of a lattice formed of alternating tetrahedrons of silicates (SiO₄⁴⁻) and aluminates (AlO₄⁵⁻) bonded at their apexes via oxygen atoms.

6. The method to prepare an inorganic binder composition according to any of claims 1 to 5, **characterized in that** said aluminosilicate source is selected from the group formed by illite, stilbite, kaolinite, metakaolin, fly ash and mixtures thereof.

7. The method to prepare an inorganic binder composition according to any of claims 1 to 6, **characterized in that** said at least one aluminosilicate source rich in reactive calcium is added to said geopolymeric phase in the proportion of 10 to 40 weight % relative to the total weight of said composition, preferably in the proportion of 15 to 30 weight % relative to the total weight of said composition.

8. The method to prepare an inorganic binder composition according to any of claims 1 to 7, **characterized in that** said aluminosilicate source rich in reactive calcium is selected from the group formed by blast furnace slag and natural or synthetic inorganic materials, wollastonite, augite, cements and mixtures thereof.

9. The method to prepare an inorganic binder composition according to any of claims 1 to 8, **characterized in that** different compounds are added to obtain an inorganic binder composition having a liquid/solid weight ratio of between 0.25 and 0.6.

10. The method to prepare an inorganic binder composition according to any of claims 1 to 9, **characterized in that** the different compounds are added to obtain an inorganic binder composition having a Na/Al ratio of between 0.8 and 1.4.

11. The method to prepare an inorganic binder composition according to any of claims 1 to 10, **characterized in that** the different compounds are added to obtain an inorganic binder composition having a Si/Al ratio of between 1 and 3.

12. The method to prepare an inorganic binder composition according to any of claims 1 to 11, **characterized in that** the different compounds are added to obtain an inorganic binder composition comprising said hydraulic phase essentially in the form of calcium silicate hydrate, in an amount equal to or lower than the contents of the constituent components of the composition.
